# EUROPÄISCHE PATENTSCHRIFT

(11) **EP 2 013 580 B1**
(45) Veröffentlichungstag und Bekanntmachung des Hinweises auf die Patenterteilung: **11.06.2014**
(21) Anmeldenummer: 07728181.4
(22) Anmeldetag: 17.04.2007
(51) Int. Cl.: G01C 21/34

(54) **VERFAHREN UND VORRICHTUNG ZUM ERMITTELN VON MINDESTKOSTEN VON EINEM STARTORT ZU EINEM ZIELORT**
METHOD AND DEVICE FOR DETERMINING MINIMUM COSTS FROM A STARTING LOCATION TO A DESTINATION
PROCÉDÉ ET DISPOSITIF POUR DÉTERMINER LE COÛT MINIMUM POUR ALLER D'UN POINT DE DÉPART À UN POINT DE DESTINATION

(30) Priorität: 24.04.2006 DE 102006018877
(43) Veröffentlichungstag der Anmeldung: 14.01.2009
(73) Patentinhaber: Continental Automotive GmbH, 30165 Hannover (DE)
(72) Erfinder: PFEIFLE, Martin, 93142 Maxhütte-Haidhof (DE); SASSE, Volker, 93138 Lappersdorf (DE); TANTZ, Uwe, 93152 Nittendorf (DE)
(86) Internationale Anmeldenummer: PCT/EP2007/053716
(87) Internationale Veröffentlichungsnummer: WO 2007/122138

(56) Entgegenhaltungen:
- WO-A-98/24035
- DE-A1- 3 609 288
- JP-A- 2001 330 461

## Beschreibung

Die Erfindung betrifft ein Verfahren und eine Vorrichtung zum Ermitteln von Mindestkosten von einem Startort zu einem Zielort auf einer Landkarte. Die Landkarte ist in Landkartenausschnitte unterteilt. Die Mindestkosten werden ermittelt für eine Planung einer Route von dem Startort zu dem Zielort. Abhängig von dem Startort wird ein vorgegebener Startlandkartenausschnitt der Landkarte ermittelt. Abhängig von dem Zielort wird ein vorgegebener Ziellandkartenausschnitt der Landkarte ermittelt.

Aus der US 2002/0059025 A1 ist ein Verfahren bekannt, um in einem Verkehrsnetzwerk einen kürzesten Weg von einem Startort zu einem Zielort zu finden. Dabei werden ein Dijkstra- und ein Floid-Warshal-Algorithmus verwendet.

Die WO 98/24035 A1 offenbart ein Verfahren zur Planung einer Route von einem Startort zu einem Zielort auf einer Landkarte, bei dem die Mindestkosten der Route ermittelt werden, sowie eine entsprechende Vorrichtung.

Die Landkarte ist in vorgegebene Landkartenausschnitte unterteilt. Aus den Landkartenausschnitten werden abhängig vom Startort bzw. Zielort jene ermittelt, die den Startort bzw. den Zielort umfassen.

Abhängig vom Startort wird eine Gruppe potentieller Startknoten ermittelt. Diese Knoten repräsentieren Übergänge, durch die vom Startlandkartenausschnitt in einen anderen Landkartenausschnitt der Landkarte übergegangen werden kann.

Aus dieser Gruppe wird eine Anzahl von Startknoten ausgewählt. Entsprechend wird auch eine Anzahl von Zielknoten ausgewählt.

Zur Planung der Gesamtroute wird dann ein optimaler Weg von einem Startknoten zu einem Zielknoten bestimmt.

Es ist Aufgabe der Erfindung, ein Verfahren und eine Vorrichtung zu schaffen, das beziehungsweise die einfach eine effektive Routenplanung ermöglicht.

Die Aufgabe wird gelöst durch die Merkmale der unabhängigen Ansprüche. Vorteilhafte Ausgestaltungen der Erfindung sind in den Unteransprüchen gekennzeichnet.

Die Erfindung zeichnet sich aus durch ein Verfahren und eine Vorrichtung zum Ermitteln von Mindestkosten von einem Startort zu einem Zielort auf einer Landkarte. Die Landkarte ist in Landkartenausschnitte unterteilt. Die Mindestkosten werden ermittelt für eine Planung einer Route von dem Startort zu dem Zielort. Aus den Landkartenausschnitten werden ein vorgegebener Startlandkartenausschnitt und ein vorgegebener Ziellandkartenausschnitt ermittelt abhängig von dem Startort beziehungsweise abhängig von dem Zielort. Der vorgegebene Startlandkartenausschnitt umfasst den Startort und der vorgegebene Ziellandkartenausschnitt umfasst den Zielort. Abhängig von dem Startort beziehungsweise Zielort wird eine vorgegebene erste Anzahl an Startknoten beziehungsweise eine vorgegebene zweite Anzahl an Zielknoten ermittelt. Die vorgegebene erste Anzahl an Startknoten repräsentieren die zu dem Startort nächstliegenden Knoten und die vorgegebene zweite Anzahl an Zielknoten repräsentieren die zu dem Zielort nächstliegenden Knoten. Ferner sind der vorgegebenen ersten Anzahl an Startknoten und der vorgegebenen zweiten Anzahl an Zielknoten Startknotenkosten beziehungsweise Zielknotenkosten von den entsprechenden Startknoten beziehungsweise Zielknoten bis zu Landkartenmarkierungen zugeordnet. Die Landkartenmarkierungen sind ausgewählte, in der Landkarte enthaltene Knoten, die über Wegabschnitte eines Wegnetzes mit anderen Knoten verbunden sind. Ferner repräsentieren die vorgegebene erste Anzahl an Startknoten und die vorgegebene zweite Anzahl an Zielknoten Übergänge, durch die von dem Startlandkartenausschnitt beziehungsweise dem Ziellandkartenausschnitt in einen anderen der Landkartenausschnitte der Landkarte übergegangen werden kann. Es wird zumindest eine der Landkartenmarkierungen und die entsprechenden Startknotenkosten und Zielknotenkosten ermittelt, abhängig von den Startknoten beziehungsweise abhängig von den Zielknoten. Die Mindestkosten werden ermittelt abhängig von den Startknotenkosten und den Zielknotenkosten.

Falls die Landkartenausschnitte jeweils in zusammenhängenden Speicherbereichen eines Geräts zum Planen der Route abgelegt sind, so ermöglicht das Planen der Route, für je einen Startort und je einen Zielort lediglich zwei Landkartenausschnitte laden zu müssen. Ferner kann im Vergleich dazu, wenn jedem Knoten die Knotenkosten zu den Landkartenmarkierungen zugeordnet sind, die zu speichernde Datenmenge stark reduziert werden. Dies kann dazu beitragen, insbesondere bei geringem Speicherplatzbedarf, insbesondere bei mobilen Geräten, ein ausreichend schnelles Planen der Route zu ermöglichen.

In einer vorteilhaften Ausgestaltung des Verfahrens werden jedem Knoten, der einen der Übergänge repräsentiert, lediglich die Knotenkosten einer vorgegebenen dritten Anzahl an Landkartenmarkierungen zugeordnet. Die vorgegebene dritte Anzahl an Landkartenmarkierungen ist kleiner als eine Gesamtzahl der Landkartenmarkierungen. Landkartenmarkierungskosten von einer der Landkartenmarkierungen zu einer anderen der Landkartenmarkierungen werden anhand einer Tabelle ermittelt. Die Tabelle umfasst die Landkartenmarkierungskosten aller Landkartenmarkierungen zueinander. Dies ermöglicht, die zu speichernde Datenmenge so weit zu reduzieren, dass die Route, insbesondere die Mindestkosten ausschließlich mit dem mobilen Gerät zum Planen der Route ermittelt werden können.

In einer weiteren vorteilhaften Ausgestaltung des Verfahrens werden für den Landkartenausschnitt, der einen ausgezeichneten Startort und/oder Zielort umfasst, Zusatzinformationen vorgegeben gegenüber den Landkartenausschnitten, die keinen ausgezeichneten Startort beziehungsweise Zielort umfassen. Dies ermöglicht in den Fällen ein sehr schnelles Planen der Route, in denen der Start- beziehungsweise Zielort dem ausgezeichneten Start- beziehungsweise Zielort entspricht.

In einer weiteren vorteilhaften Ausgestaltung des Verfahrens wird zumindest eine zusätzliche Landkartenmarkierung als Zusatzinformation vorgegeben. Dies kann zu einem besonders schnellen Plan der Route beitragen.

In einer weiteren vorteilhaften Ausgestaltung des Verfahrens wird als Zusatzinformation eine der Landkartenmarkierungen so vorgegeben, dass sie dem ausgezeichneten Startort und/oder Zielort entspricht. Dies kann in den Fällen zu einem besonders schnellen Planen der Route beitragen, in denen der Start- beziehungsweise Zielort dem ausgezeichneten Start- beziehungsweise Zielort entspricht.

In einer weiteren vorteilhaften Ausgestaltung des Verfahrens umfassen die Knotenkosten und/oder Landkartenmarkierungskosten räumliche und/oder zeitliche Kosten. Die räumlichen Kosten repräsentieren räumliche Abstände von den Knoten zu den Landkartenmarkierungen und/oder zwischen den Landkartenmarkierungen. Die zeitlichen Kosten repräsentieren eine Fahrdauer, die durchschnittlich benötigt wird, um die räumlichen Abstände zurückzulegen. Dies ermöglicht, beispielsweise Geschwindigkeitsbegrenzungen, Mautstellen und/oder dynamische Verkehrsbedingungen, beispielsweise Staus, Baustellen und/oder Berufsverkehr, bei dem Planen der Route zu berücksichtigen.

In einer weiteren vorteilhaften Ausgestaltung des Verfahrens werden abhängig von einem Benutzerwunsch die zeitlichen und räumlichen Kosten gewichtet. Die Route und/oder die Mindestkosten werden abhängig von den gewichteten Kosten ermittelt. Dies ermöglicht, beim Planen der Route zu berücksichtigen, ob und inwieweit dem Benutzer eine kürzere Streckenlänge der Route, eine kürzere Fahrdauer oder andere geringe Kosten zum Zurücklegen der Route wichtig sind.

Die vorteilhaften Ausgestaltungen des Verfahrens können ohne weiteres auf vorteilhafte Ausgestaltungen der Vorrichtung übertragen werden.

Die Erfindung ist im Folgenden anhand von schematischen Zeichnungen näher erläutert. Es zeigen:
- Figur 1: eine erste Ansicht einer Landkarte,
- Figur 2: eine zweite Ansicht der Landkarte,
- Figur 3: eine Tabelle mit Landkartenmarkierungskosten,
- Figur 4: eine dritte Ansicht der Landkarte,
- Figur 5: ein Programm zum Ermitteln von Mindestkosten,
- Figur 6: eine Berechnungsvorschrift zum Gewichten von Kosten.

Elemente gleicher Konstruktion oder Funktion sind figurenübergreifend mit den gleichen Bezugszeichen gekennzeichnet.

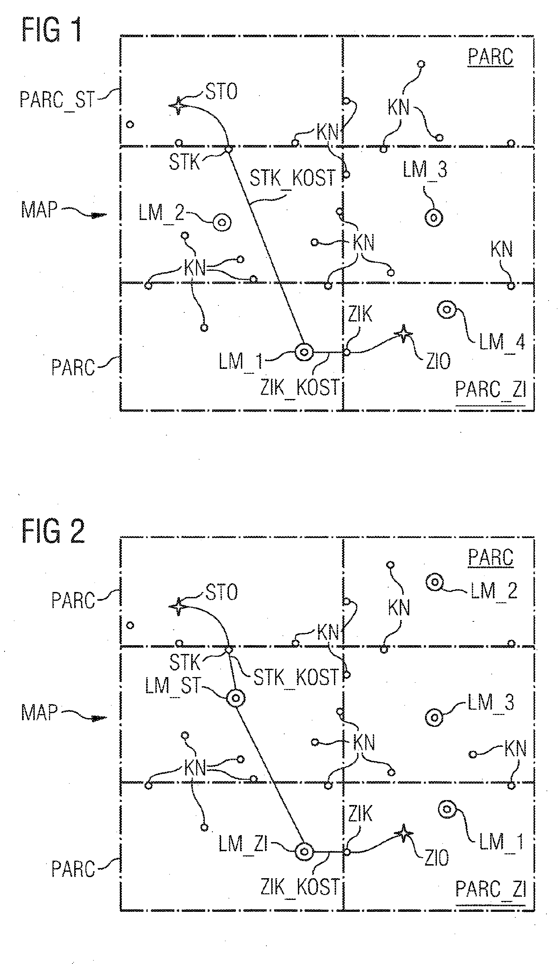

Eine Landkarte MAP (Figur 1) ist in Landkartenausschnitte PARC unterteilt. Vorzugsweise ist jeder der Landkartenartenausschnitte PARC als zusammenhängendes Datenpaket, beispielsweise als binary large object (BLOB), in einem zusammenhängenden Speicherbereich eines Speichermediums eines Geräts gespeichert. Das Gerät eignet sich zum Ermitteln einer Route und insbesondere zum Ermitteln von Mindestkosten MIN_KOST innerhalb der Landkarte MAP.

Die Landkarte MAP umfasst Knoten KN, Landkartenmarkierungen, Landkartenausschnitte PARC und mindestens einen Startort STO und mindestens einen Zielort ZIO. Die Landkartenmarkierungen umfassen mindestens erste bis vierte Landkartenmarkierungen LM 1 - LM 4. Die Knoten KN umfassen mindestens eine Startknoten STK und einen Zielknoten ZIK. Vorzugsweise ist jeder der Knoten KN repräsentativ für eine Straßenkreuzung. Die Landkartenausschnitte PARC umfassen mindestens einen Startlandkartenausschnitt PARC_ST und einen Ziellandkartenausschnitt PARC_ZI, die den Startort STO bzw. den Zielort ZIO umfassen.

Den Knoten KN, die einen Übergang von einem Landkartenausschnitt PARC zu einem anderen Landkartenausschnitt PARC repräsentieren, sind Knotenkosten bis zu den Landkartenmarkierungen zugeordnet. Zugeordnet kann in diesen Zusammenhang beispielsweise bedeuten, dass auf einem Speichermedium, auf dem die Landkarte MAP gespeichert ist, jeweils einer der Knoten KN und die entsprechenden Knotenkosten in einem zusammenhängenden Speicherbereich abgespeichert sind. Dies ist besonders vorteilhaft, da bei einem Laden des Knotens KN zum Ermitteln einer Route und/oder von Mindestkosten MIN_KOST, die für die Route benötigt werden, dann automatisch auch die entsprechenden Knotenkosten geladen werden. Somit wird zum Ermitteln der Knotenkosten keine zusätzliche Zeit benötigt. Beispielsweise können die Knoten KN, die die Übergänge repräsentieren, auf oder sehr nahe an den Rändern des entsprechenden Landkartenausschnitts PARC liegen. Falls sich die Landkartenausschnitte PARC überlappen, können beispielsweise die Knoten KN die Übergänge repräsentieren, die in dem Überlappungsbereich der Landkartenausschnitte PARC liegen. Zum Ermitteln der Route müssen dann lediglich der Startlandkartenausschnitt PARC_ST und der Ziellandkartenausschnitt PARC_ZI ermittelt werden.

Die Knoten KN, die die Übergänge repräsentieren, umfassen zumindest einen, bevorzugt mehrere Startknoten STK und einen, bevorzugt mehrere Zielknoten ZIK. Die Startknoten STK repräsentieren die zu dem Startort STO nächstliegenden Knoten KN. Die Startknoten STK weisen Startknotenkosten STK_KOST zumindest zu den ersten bis vierten Landkartenmarkierungen LM_1 - LM_4 auf. Die Zielknoten ZIK repräsentieren die nächstliegenden einen Übergang repräsentierenden Knoten KN zu dem Zielort ZIO. Die Zielknoten ZIK weisen Zielknotenkosten ZIK_KOST zumindest zu den ersten bis vierten Landkartenmarkierungen auf.

Die Kosten umfassen die Knotenkosten und die Mindestkosten MIN_KOST. Die Knotenkosten umfassen die Startknotenkosten STK_KOST, die Zielknotenkosten ZI_KOST und weitere Knotenkosten von einem anderen der Knoten KN zu den ersten bis vierten Landkartenmarkierungen LM_1 - LM_4. Die Kosten sind beispielsweise repräsentativ für räumliche Abstände zwischen den Knoten und den Landkartenmarkierungen, für räumliche Abstände zwischen den Landkartenmarkierungen untereinander, für Fahrdauern DUR die durchschnittlich benötigt werden um die räumlichen Abstände zurückzulegen, für Geschwindigkeitsbegrenzungen und/oder für Mautstellen. Die Mindestkosten MIN_KOST sind repräsentativ für die minimalen Kosten, die benötigt werden, um von dem Startort STO zu dem Zielort ZIO zu gelangen. Das Ermitteln der Mindestkosten MIN_KOST kann einen Suchraum beim Suchen einer Route stark einschränken und somit das Planen der Route stark beschleunigen.

Zum Ermitteln der Mindestkosten MIN_KOST müssen Daten von Landkartenausschnitten PARC geladen werden. Zusammen mit den Daten des Startlandkartenausschnitts PARC_ST werden auch die Daten der Startknoten STK geladen, die auf dem Rand des Startlandkartenausschnitts PARC_ST liegen. Mit den Daten der Startknoten STK werden vorzugsweise auch die Startknotenkosten STK_KOST geladen. Befindet sich in dem Ziellandkartenausschnitt PARC_ZI eine der Landkartenmarkierungen so müssen nun lediglich die Kosten von dem Zielort ZIO zu der entsprechenden Landkartenmarkierung ermittelt werden. Befindet sich beispielsweise keine der Landkartenmarkierungen in dem Ziellandkartenausschnitt PARC ZI, so können abhängig von dem Zielort ZIO die Zielknoten ZIK ermittelt werden, die auf dem Rand des Ziellandkartenausschnitts PARC_ZI liegen und denen die Knotenkosten zumindest bis zu der entsprechenden Landkartenmarkierung zugeordnet sind. Die Landkartenausschnitte PARC, die ersten bis vierten Landkartenmarkierungen LM_1 - LM 4 umfassen, müssen nicht geladen werden, da die Knotenkosten zu den ersten bis vierten Landkartenmarkierungen LM_1 - LM 4 den Start- und Zielknoten STK, ZIK zugeordnet sind.

Vorzugsweise sind den Knoten KN, die Übergänge repräsentieren, lediglich Knotenkosten zu einer vorgegebenen Anzahl an nächstliegenden Landkartenmarkierungen zugeordnet (Figur 2). Insbesondere sind dem Startknoten STK Startknotenkosten STK_KOST zu einer vorgegebenen ersten Anzahl nächstliegender Startlandkartenmarkierungen LM_ST zugeordnet und dem Zielknoten ZIK sind Zielknotenkosten ZIK_KOST zu einer vorgegebenen zweiten Anzahl an Ziellandkartenmarkierungen LM_ZI zugeordnet. Die Startlandkartenmarkierungen LM_ST und die Ziellandkartenmarkierungen LM_ZI repräsentieren die nächstliegenden Landkartenmarkierungen zu den Startknoten STK bzw. zu den Zielknoten ZIK. Die vorgegebene erste und zweite Anzahl an nächstliegenden Landkartenmarkierungen ist vorzugsweise weitaus kleiner als die Gesamtzahl aller Landkartenmarkierungen. Beispielsweise kann die erste und/oder zweite Anzahl der nächstliegenden Landkartenmarkierungen einem bis zehn Prozent aller Landkartenmarkierungen entsprechen. Die erste und/oder zweite Anzahl an nächstliegenden Landkartenmarkierungen kann von Konten KN zu Knoten KN variieren, sie kann aber auch für alle Knoten KN gleich und/oder fest vorgegeben sein.

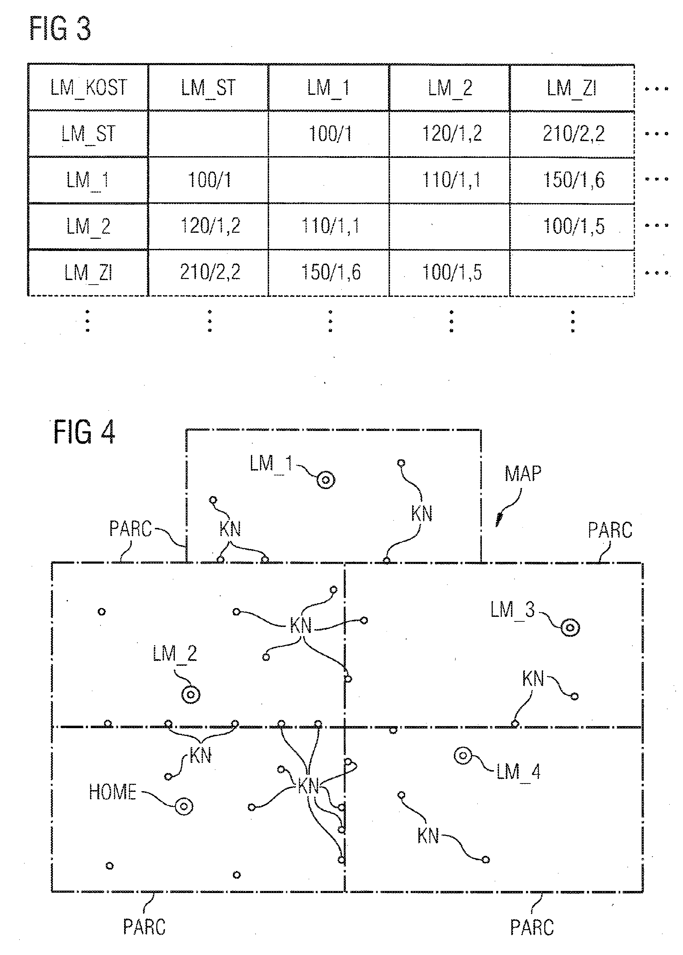

Die Landkartenmarkierungskosten LM_KOST aller Landkartenmarkierungen zueinander sind dann bevorzugt in einer Tabelle hinterlegt (Figur 3). Die Tabelle ist vorzugsweise auf dem Speichermedium gespeichert. Beispielsweise sind die Landkartenmarkierungskosten von der Startlandkartenmarkierung LM_ST bis zu der ersten Landkartenmarkierung LM_1 im Durchschnitt hundert Kilometer und eine Stunde. Das heißt, ein Fahrzeug legt die hundert Kilometer zwischen der Startlandkartenmarkierung LM_ST und der ersten Landkartenmarkierung LM_1 durchschnittlich in einer Stunde zurück. Die Tabelle kann auch unsymmetrisch sein. Das bedeutet in diesem Zusammenhang, dass die Kosten von dem Startort STO zu dem Zielort ZIO, insbesondere die Kosten von der Startlandkartenmarkierung LM_ST zu der Ziellandkartenmarkierung LM_ZI, andere Kosten sein können als von dem Zielort ZIO zu dem Startort STO bzw. von der Ziellandkartenmarkierung LM_ZI zu der Startlandkartenmarkierung LM_ST. Ferner sind bevorzugt alle Kosten abhängig von der Richtung, in der die Route durchfahren wird. Dies kann zum Beispiel durch eine Einbahnstraße hervorgerufen werden.

Bevorzugt wird zumindest ein ausgezeichneter Start- und/oder Zielort vorgegeben (Figur 4). Vorzugsweise entspricht der ausgezeichnete Start- bzw. Zielort einem Start- bzw. Zielort STO, ZIO, den ein Benutzer des Geräts zum Planen der Route häufig auswählt. Dem ausgezeichneten Start- bzw. Zielort wird dann vorzugsweise zumindest eine zusätzliche Landkartenmarkierung, insbesondere eine ausgezeichnete Landkartenmarkierung HOME zugeteilt. Die Landkartenmarkierungskosten LM_KOST der ausgezeichneten Landkartenmarkierung HOME zu den anderen Landkartenmarkierungen werden dann in der Tabelle der Landkartenmarkierungskosten LM_KOST abgespeichert. Bei einer Routenplanung ausgehend von bzw. ankommend an der ausgezeichneten Landkartenmarkierung HOME können dann die Mindestkosten MIN_KOST und/oder die Route sehr schnell berechnet werden, da die ausgezeichnete Landkartenmarkierung HOME repräsentativ ist für den Startknoten STK bzw. für den Zielknoten ZIK. Die Startknotenkosten STK_KOST bzw. die Zielknotenkosten ZIK_KOST können dann automatisch gleich null gesetzt werden. Die ausgezeichnete Landkartenmarkierung HOME kann beispielsweise repräsentativ sein für einen Arbeitsplatz des Benutzers, für einen Wohnort und/oder beispielsweise eine beliebte Freizeitanlage des Benutzers.

Das Versehen des ausgezeichneten Start- und/oder Zielorts STO, ZIO mit der ausgezeichneten Landkartenmarkierung HOME kann als eigenständiger Aspekt der Erfindung gesehen werden. Falls der Startort STO oder der Zielort ZIO der ausgezeichneten Landkartenmarkierung HOME entspricht und falls jedem Knoten KN die Knotenkosten zu allen Landkartenmarkierungen zugeordnet sind, müssen dann zum Ermitteln der Mindestkosten MIN_KOST lediglich die Zielknotenkosten ZIK_KOST bzw. die Startknotenkosten STK_KOST ermittelten werden. Falls der Startort STO oder der Zielort ZIO der ausgezeichneten Landkartenmarkierung HOME entspricht und falls jedem Knoten KN lediglich die Knotenkosten zu den nächstliegenden Landkartenmarkierungen zugeordnet sind, müssen dann zum Ermitteln der Mindestkosten MIN_KOST lediglich die Zielknotenkosten ZIK_KOST bzw. die Startknotenkosten STK_KOST und der Landkartenmarkierungsabstand LM_KOST von der Ziellandkartenmarkierung LM_ST zu der ausgezeichneten Landkartenmarkierung HOME anhand der Tabelle der Landkartenmarkierungskosten LM_KOST ermittelt werden.

Das Ermitteln der Mindestkosten MIN_KOST kann weiterhin beschleunigt werden, indem der Landkartenausschnitt PARC, der den ausgezeichneten Start- bzw. Zielort umfasst, mit Zusatzinformationen ausgestattet wird, die über die Informationen hinausgehen, die den Landkartenausschnitten PARC zugeordnet sind, die keinen ausgezeichneten Start- bzw. Zielort umfassen. Die Zusatzinformationen können beispielsweise zusätzliche Landkartenmarkierungen, wie die ausgezeichnete Landkartenmarkierung HOME, den ausgezeichneten Start- bzw. Zielort selbst, zusätzliche Knoten KN auf dem Rand des entsprechenden Landkartenausschnitts PARC mit entsprechenden Knotenkosten und/oder weitere Zusatzinformationen umfassen.

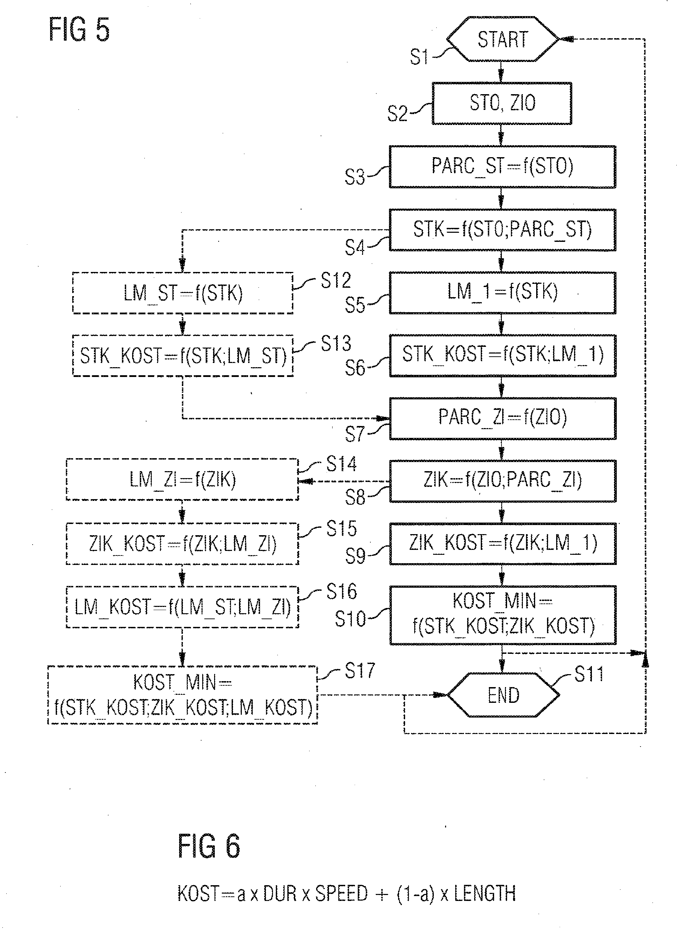

Ein Programm (Figur 5) zum Ermitteln der Mindestkosten MIN_KOST ist vorzugsweise auf dem Speichermedium des Geräts zum Ermitteln der Route gespeichert. Das Gerät kann beispielsweise ein PC, ein Laptop, ein Pocket-Computer, ein Routenplanungssystem und/oder ein Navigationssystem sein. Das Gerät kann auch als Vorrichtung zum Ermitteln der Mindestkosten von dem Startort STO zu dem Zielort ZIO für die Planung der Route von dem Startort STO zu dem Zielort ZIO auf einer Landkarte MAP bezeichnet werden. Das Programm wird vorzugsweise bei einer Suchanfrage des Benutzers des Geräts nach der Route von dem Startort STO zu dem Zielort ZIO in einem Schritt S1 gestartet. In dem Schritt S1 werden gegebenenfalls Variablen initialisiert.

In einem Schritt S2 werden der Startort STO und der Zielort ZIO erfasst, die von dem Benutzer eingegeben und gespeichert wurden.

In einem Schritt S3 wird aus den Landkartenausschnitten PARC abhängig von dem Startort STO der Startlandkartenausschnitt PARC_ST ermittelt, der den Startort STO umfasst. Ferner wird das zusammenhängende Datenpaket geladen, in dem der Startlandkartenausschnitt PARC_ST enthalten ist.

In einem Schritt S4 werden die Startknoten STK ermittelt abhängig von dem Startort STO und abhängig von dem Startlandkartenausschnitt PARC_ST.

In einem Schritt S5 wird zumindest eine der Landkartenmarkierungen, vorzugsweise mehrere der Landkartenmarkierungen ermittelt, beispielsweise die erste Landkartenmarkierung LM_1 und/oder die Startlandkartenmarkierung LM_ST und/oder die ausgezeichnete Landkartenmarkierung HOME.

In einem Schritt S6 werden die Startknotenkosten STK_KOST ermittelt abhängig von den ermittelten Startknoten STK und abhängig von den ermittelten Landkartenmarkierungen.

In einem Schritt S7 wird abhängig von dem Zielort ZIO der Ziellandkartenausschnitt PARC_ZI ermittelt.

In einem Schritt S8 werden die Zielknoten ZIK ermittelt abhängig von dem Zielort ZIO und abhängig von dem Ziellandkartenausschnitt PARC_ZI.

In einem Schritt S9 werden die entsprechenden Zielknotenkosten ZIK_KOST ermittelt abhängig von den entsprechenden Zielknoten ZIK und abhängig von den ermittelten Landkartenmarkierungen.

In einem Schritt S10 werden die Mindestkosten MIN_KOST ermittelt abhängig von den ermittelten Startknotenkosten STK_KOST und Zielknotenkosten. Vorzugsweise werden Differenzen gebildet, indem von den Startknotenkosten STK_KOST die Zielknotenkosten ZIK_KOST abgezogen werden, für alle Tripel von ermittelten Startknoten STK, Zielknoten ZIK und Landkartenmarkierungen und anschließendes Ermitteln der größten Differenz ermittelt. Die größte Differenz ist repräsentativ für die Mindestkosten MIN_KOST

In einem Schritt S11 kann das Programm beendet werden. Vorzugsweise wird jedoch das Programm erneut gestartet. Falls sich das Gerät zum Planen der Route während dem Durchfahren der Route bis zu dem erneuten Starten des Programms zu einem anderen Knoten KN bewegt hat als bei dem ersten Starten des Programms, so kann dieser Knoten KN bevorzugt als neuer Startort STO und/oder als neuer Startknoten STK zum Ermitteln von neuen Mindestkosten MIN_KOST herangezogen werden.

Falls jedem Knoten KN, der einen der Übergänge repräsentiert, lediglich die Knotenkosten zu der vorgegebenen ersten Anzahl an Landkartenmarkierungen zugeordnet sind und falls die Landkartenmarkierungskosten LM_KOST in der Tabelle der Landkartenmarkierungskosten LM_KOST hinterlegt sind, so werden alternativ zu den Schritten S5 und S6 Schritte S12 und S13 und alternativ zu den Schritten S9 und S10 Schritte S14 bis S17 abgearbeitet.

In dem Schritt S12 wird zumindest eine der Startlandkartenmarkierungen LM_ST abhängig von den Startort STO ermittelt.

In dem Schritt S13 werden die Startknotenkösten STK_KOST abhängig von den entsprechenden Startknoten STK und abhängig von der ermittelten Startlandkartenmarkierung LM_ST ermittelt.

In dem Schritt S14 werden die Ziellandkartenmarkierungen LM_ZI abhängig von den Zielknoten ZIK ermittelt.

In einem Schritt S15 werden die Zielknotenkosten ZIK_KOST ermittelt abhängig von den ermittelten Zielknoten ZIK und abhängig von den ermittelten Ziellandkartenmarkierungen LM_ZI.

In einem Schritt S16 werden die Landkartenmarkierungskosten LM_KOST anhand der Tabelle der Landkartenmarkierungskosten LM KOST ermittelt, und zwar zu jedem möglichen Paar von Startlandkartenmarkierungen LM_ST und Ziellandkartenmarkierungen LM_ZI.

In dem Schritt S17 werden die Mindestkosten MINJKOST ermittelt vorzugsweise durch bilden einer Differenz durch Abziehen der Startknotenkosten STK_KOST und der Zielknotenkosten ZIK_KOST von den Landkartenmarkierungskosten LM_KOST für alle möglichen Kombinationen von ermittelten Startknoten STK, Zielknoten ZIK, Startlandkartenmarkierungen LM_ST und Ziellandkartenmarkierungen LM_ZI und durch anschließendes Ermitteln der größten Differenz. Die größte Differenz ist dann repräsentativ für die Mindestkosten MIN_KOST.

In Zusammenhang mit den räumlichen, zeitlichen und weiteren Kosten ist es besonders vorteilhaft, wenn bei der Routenplanung nicht nur entweder die räumlichen, die zeitlichen Kosten oder die weiteren Kosten berücksichtigt werden, sondern alle gleichzeitig. Dazu ist es besonders vorteilhaft, wenn der Benutzer selbst gewichten kann, wie wichtig ihm eine Optimierung der Route beispielsweise bezüglich der Fahrdauer DUR, der zurückzulegenden Streckenlänge LENGTH und/oder Mautgebühren ist. Beispielsweise können gewichtete Kosten KOST (Figur 6) als Funktion der Fahrdauer DUR, einer durchschnittlich möglichen Geschwindigkeit SPEED des Kraftfahrzeugs, der Streckenlänge LENGTH und eines Gewichtungsfaktors a ermittelt werden, vorzugsweise nach der in Figur 6 angegebenen Berechnungsvorschrift. Der Gewichtungsfaktor a ist vorzugsweise eine prozentuale Größe. Als Daten werden jeweils nur die hundertprozentigen Werte an den entsprechend Knoten KN abgespeichert und die individuelle Gewichtung erfolgt abhängig von einem Benutzerwunsch des Benutzers in Echtzeit während dem Ermitteln der Route, insbesondere während dem Ermitteln der Mindestkosten MIN_KOST. Somit können nahezu unendlich viele Kombinationen unterschiedlicher Gewichtungsmöglichkeiten bereitgestellt werden, obwohl lediglich eine stark begrenzte abzuspeichernde Datenmenge dazu verwendet wird.

Die Erfindung ist nicht auf die angegebenen Ausführungsbeispiele beschränkt. Beispielsweise können die unterschiedlichen Ausführungsbeispiele miteinander kombiniert werden. Beispielsweise kann ein Landkartenausschnitt PARC, der den ausgezeichneten Start- bzw. Zielort umfasst, mit der ausgezeichneten Landkartenmarkierung HOME und/oder weiteren zusätzlichen Landkartenmarkierungen und/oder mit mehr Knoten KN die die Kosten zu den nächstliegenden Landkartenmarkierungen umfassen, auf dem Rand des entsprechenden Landkartenausschnitts PARC versehen werden. Ferner können mehrere Landkartenausschnitte PARC mit den zusätzlichen Informationen versehen werden, insbesondere können mehrere ausgezeichnete Landkartenmarkierungen HOME gesetzt werden.

## Patentansprüche

1. Verfahren zum Ermitteln von Mindestkosten (MIN_KOST) von einem Startort (STO) zu einem Zielort (ZIO) auf einer Landkarte (MAP), die in Landkartenausschnitte (PARC) unterteilt ist, für eine Planung einer Route von dem Startort (STO) zu dem Zielort (ZIO), bei dem
- aus den Landkartenausschnitten (PARC) ein vorgegebener Startlandkartenausschnitt (PARC_ST) und ein vorgegebener Ziellandkartenausschnitt (PARC_ZI) der Landkarte (MAP) ermittelt werden, die den Startort (STO) bzw. den Zielort (ZIO) umfassen, abhängig von dem Startort (ZIO) bzw. abhängig von dem Zielort (ZIO),
- abhängig von dem Startort (STO) bzw. Zielort (ZIO) eine vorgegebene erste Anzahl an Startknoten (STK) bzw. eine vorgegebene zweite Anzahl an Zielknoten (ZIK) ermittelt wird, die die nächstliegenden Knoten (KN) zu dem Startort (STO) bzw. zu dem Zielort (ZIO) repräsentieren, denen Startknotenkosten (STK_KOST) bzw. Zielknotenkosten (ZIK_KOST) von den entsprechenden Startknoten (STK) bzw. Zielknoten (ZIK) bis zu Landkartenmarkierungen (LM_1-LM_4) zugeordnet sind, wobei die Landkartenmarkierungen ausgewählte, in der Landkarte enthaltene Knoten sind, welche über Wegabschnitte eines Wegnetzes mit anderen Knoten verbunden sind, und die Übergänge repräsentieren, durch die von dem Startlandkartenausschnitt (PARC_ST) bzw. dem Ziellandkartenausschnitt (PARC_ZI) in einen anderen der Landkartenausschnitte (PARC) der Landkarte (MAP) übergegangen werden kann,
- zumindest eine der Landkartenmarkierungen und die entsprechenden Startknotenkosten (STK_KOST) und Zielknotenkosten ZIK_KOST) ermittelt werden abhängig von den Startknoten (STK) bzw. abhängig von den Zielknoten (ZIK),
- die Mindestkosten (MIN_KOST) ermittelt werden abhängig von den Startknotenkosten (STK_KOST) und den Zielknotenkosten (ZIK_KOST).

2. Verfahren nach Anspruch 1, bei dem jedem Knoten (KN), der einen der Übergänge repräsentiert, lediglich die Knotenkosten einer vorgegebenen dritten Anzahl an Landkartenmarkierungen zugeordnet werden, die kleiner ist als eine Gesamtanzahl der Landkartenmarkierungen, und bei dem Landkartenmarkierungskosten (LM_KOST) von einer der Landkartenmarkierungen zu einer anderen der Landkartenmarkierungen anhand einer Tabelle ermittelt werden, die die Landkartenmarkierungskosten (LM_KOST) aller Landkartenmarkierungen zueinander umfasst.

3. Verfahren nach einem der vorstehenden Ansprüche, bei dem für den Landkartenausschnitt (PARC), der einen ausgezeichneten Startort und/oder Zielort umfasst, Zusatzinformationen vorgegeben werden gegenüber den Landkartenausschnitten (PARC), die keinen ausgezeichneten Startort bzw. Zielort umfassen.

4. Verfahren nach Anspruch 3, bei dem als Zusatzinformation zumindest eine zusätzliche Landkartenmarkierung vorgegeben wird.

5. Verfahren nach einem der Ansprüche 3 oder 4, bei dem als Zusatzinformation eine der Landkartenmarkierungen so vorgegeben wird, dass sie dem ausgezeichneten Startort und/oder Zielort entspricht.

6. Verfahren nach einem der vorstehenden Ansprüche, bei dem die Knotenkosten und/oder Landkartenmarkierungskosten (LM_KOST) räumliche und/oder zeitliche Kosten umfassen, wobei die räumlichen Kosten räumliche Abstände von den Knoten (KN) zu den Landkartenmarkierungen und/oder zwischen den Landkartenmarkierungen repräsentieren und die zeitlichen Kosten eine Fahrdauer (DUR) repräsentieren, die durchschnittlich benötigt wird, um die räumlichen Abstände zurückzulegen.

7. Verfahren nach Anspruch 6, bei dem
- abhängig von einem Benutzerwunsch die zeitlichen und räumlichen Kosten gewichtet werden,
- die Route und/oder die Mindestkosten (MIN_KOST) abhängig von den gewichteten Kosten ermittelt wird.

8. Vorrichtung zum Ermitteln von Mindestkosten (MIN KOST) von einem Startort (STO) zu einem Zielort (ZIO) auf einer Landkarte (MAP), die in Landkartenausschnitte (PARC) unterteilt ist, für eine Planung einer Route von dem Startort (STO) zu dem Zielort (ZIO), wobei die Vorrichtung ausgebildet ist zum
- Ermitteln eines vorgegebenen Startlandkartenausschnitts (PARC_ST) und eines vorgegebenen Ziellandkartenausschnitts (PARC_ZI), die den Startort (STO) bzw. den Zielort (ZIO) umfassen, aus den Landkartenausschnitten (PARC) der Landkarte (MAP) abhängig von dem Startort (ZIO) bzw. abhängig von dem Zielort (ZIO),
- Ermitteln einer vorgegebenen ersten Anzahl an Startknoten (STK) bzw. einer vorgegebenen zweiten Anzahl an Zielknoten (ZIK), die die nächstliegenden Knoten (KN) zu dem Startort (STO) bzw. zu dem Zielort (ZIO) repräsentieren, denen Startknotenkosten (STK_KOST) bzw. Zielknotenkosten (ZIK_KOST) von den entsprechenden Startknoten (STK) bzw. Zielknoten (ZIK) bis zu Landkartenmarkierungen (LM_1-LM_4) zugeordnet sind, wobei die Landkartenmarkierungen ausgewählte, in der Landkarte enthaltene Knoten sind, welche über Wegabschnitte eines Wegnetzes mit anderen Knoten verbunden sind, und die Übergänge repräsentieren, durch die von dem Startlandkartenausschnitt (PARC_ST) bzw. dem Ziellandkartenausschnitt (PARC_ZI) in einen anderen der Landkartenausschnitte (PARC) der Landkarte (MAP) übergegangen werden kann, abhängig von dem Startort (STO) bzw. Zielort (ZIO),
- Ermitteln zumindest einer der Landkartenmarkierungen und der entsprechenden Startknotenkosten (STK_KOST) und Zielknotenkosten (ZIK_KOST) abhängig von dem Startknoten (STK) bzw. abhängig von dem Zielknoten (ZIK),
- Ermitteln der Mindestkosten (MIN_KOST) abhängig von den Startknotenkosten (STK_KOST) und den Zielknotenkosten (ZIK KOST).

## Claims

1. Method for determining minimum costs (MIN_KOST) from a starting location (STO) to a destination (ZIO) on a map (MAP), which is subdivided into map sections (PARC) in order to plan a route from the starting location (STO) to the destination (ZIO), in which
- a prescribed starting map section (PARC_ST) and a prescribed destination map section (PARC_ZI) of the map (MAP) which include the starting location (STO) and the destination (ZIO) are determined from the map sections (PARC) as a function of the starting location (STO) and as a function of the destination (ZIO), respectively,
- as a function of the starting location (STO) and/or destination (ZIO) there are determined a prescribed first number of starting nodes (STK) or a prescribed second number of destination nodes (ZIK) which represent the nearest nodes (KN) to the starting location (STO) or to the destination (ZIO), respectively, to which there are assigned starting node costs (STK_KOST) or destination node costs (ZIK_KOST) from the corresponding starting nodes (STK) or destination nodes (ZIK) up to map markers (LM_1-LM_4), the map markers being selected nodes included in the map which are connected to other nodes via road sections of a road network, and which represent transitions by means of which it is possible to pass over from the starting map section (PARC_ST) or the destination map section (PARC_ZI) into another one of the map sections (PARC) of the map (MAP),
- at least one of the map markers and the corresponding starting node costs (STK_KOST) and destination node costs (ZIK_KOST) are determined as a function of the starting nodes (STK) or as a function of the destination nodes (ZIK), and
- the minimum costs (MIN_KOST) are determined as a function of the starting node costs (STK_KOST) and the destination node costs (ZIK_KOST).

2. Method according to Claim 1, in which each node (KN) which represents one of the transitions is assigned only the node costs of a prescribed third number of map markers which is smaller than a total number of the map markers, and in which map marker costs (LM_KOST) are determined from one of the map markers to another of the map markers with the aid of a table which includes the map marker costs (LM_KOST) of all the map markers relative to one another.

3. Method according to one of the preceding claims, in which for the map section (PARC) which includes an excellent starting location and/or destination additional information is prescribed in relation to the map sections (PARC) which do not include an excellent starting location and/or destination.

4. Method according to Claim 3, in which at least one additional map marker is prescribed as additional information.

5. Method according to either of Claims 3 or 4, in which one of the map markers is prescribed as additional information such that it corresponds to the excellent starting location and/or destination.

6. Method according to one of the preceding claims, in which the node costs and/or map marker costs (LM_KOST) include spatial and/or temporal costs, the spatial costs representing spatial differences from the nodes (KN) to the map markers and/or between the map markers, and the temporal costs represent a driving period (DUR) which is required on average in order to cover the spatial distances.

7. Method according to Claim 6, in which
- the temporal and spatial costs are weighted as a function of a user's wish,
- the route and/or the minimum costs (MIN_KOST) are determined as a function of the weighted costs.

8. Device for determining minimum costs (MIN_KOST) from a starting location (STO) to a destination (ZIO) on a map (MAP), which is subdivided into map sections (PARC) in order to plan a route from the starting location (STO) to the destination (ZIO), the device being designed so that
- a prescribed starting map section (PARC_ST) and a prescribed destination map section (PARC_ZI) which include the starting location (STO) and the destination (ZIO) are determined from the map sections (PARC) of the map (MAP) as a function of the starting location (STO) and as a function of the destination (ZIO), respectively,
- there are determined as a function of the starting location (STO) and/or destination (ZIO) a prescribed first number of starting nodes (STK) or a prescribed second number of destination nodes (ZIK) which represent the nearest nodes (KN) to the starting location (STO) or to the destination (ZIO), respectively, to which there are assigned starting node costs (STK_KOST) or destination node costs (ZIK_KOST) from the corresponding starting nodes (STK) or destination nodes (ZIK) up to map markers (LM_1-LM_4), the map markers being selected nodes included in the map which are connected to other nodes via road sections of a road network, and which represent transitions by means of which it is possible to pass over from the starting map section (PARC_ST) or the destination map section (PARC_ZI) into another one of the map sections (PARC) of the map (MAP),
- at least one of the map markers and the corresponding starting node costs (STK_KOST) and destination node costs (ZIK_KOST) are determined as a function of the starting nodes (STK) or as a function of the destination nodes (ZIK), and
- the minimum costs (MIN_KOST) are determined as a function of the starting node costs (STK_KOST) and the destination node costs (ZIK_KOST).

## Revendications

1. Procédé de détermination du coût (MIN_KOST) minimum pour aller d'un point (STO) de départ à un point (ZIO) de destination sur une carte (MAP) géographique qui est subdivisée en parties (PARC) de carte géographique pour planifier un itinéraire du point (STO) de départ au point (ZIO) de destination, dans lequel
- on détermine dans les parties (PARC) de carte géographie une partie (PARC_ST) de carte géographique de départ donnée à l'avance et une partie (PARC_ZI) de carte géographique de destination donnée à l'avance de la carte (MAP) géographique, qui comprennent le point (STO) de départ et respectivement le point (ZIO) de destination, la détermination s'effectuant en fonction du point (ZIO) de départ et respectivement en fonction du point (ZIO) de destination,
- en fonction du point (STO) de départ et respectivement du point (ZIO) de destination, on détermine un premier nombre donné à l'avance de noeuds (STK) de départ et un deuxième nombre donné à l'avance de noeuds (ZIK) de destination, qui représentent les noeuds (KN) les plus proche du point (STO) de départ et respectivement du point (ZIO) de destination, auxquels on affecte des coûts (STK_KOST) de noeuds de départ et des coûts (ZIK_KOST) de noeuds de destination des noeuds (STK) de départ ou des noeuds (ZIK) de destination correspondants jusqu'à des repères (LM_1-LM_4) de la carte géographique, les repères de la carte géographique étant choisis dans les noeuds contenus dans la carte géographique qui sont reliés à d'autres noeuds par des tronçons de voies d'un réseau de voies et qui représentent des passages par lesquels on peut passer de la partie (PARC_ST) de carte géographique de départ ou de la partie (PARC_ZI) de carte géographique de destination dans une autre des parties (PARC) de la carte (MAP) géographique,
- on détermine en fonction des noeuds (STK) de départ et en fonction des noeuds (ZIK) de destination au moins l'un des repères de carte géographique et le coût (STE_KOST) de noeuds de départ correspondant et le coût (ZIK_KOST) de noeuds de destination correspondant,
- on détermine le coût (MIN_KOST) minimum en fonction du coût (STK_KOST) du noeud de départ et du coût (ZIK_KOST) de noeuds de destination.

2. Procédé suivant la revendication 1, dans lequel on affecte à chaque noeud (KN), qui représente l'un des passages, seulement le coût de noeuds d'un troisième nombre donné à l'avance de repères de carte géographique qui est plus petit qu'un nombre total des repères de la carte géographique et on détermine les coûts (LM_KOST) de repère de la carte géographique de l'un des repères de la carte géographique à un autre des repères de la carte géographique au moyen d'un tableau qui comprend les coûts (LM_KOST) de repères de la carte géographique de tous les repères de la carte géographique les uns par rapport aux autres.

3. Procédé suivant l'une des revendications précédentes, dans lequel, pour la partie (PARC) de la carte géographique qui comprend un point de départ et/ou un point de destination remarquable, on donne à l'avance des informations supplémentaires par rapport aux parties (PARC) de la carte géographique qui ne comprennent pas de point de départ ou de point de destination remarquable.

4. Procédé suivant la revendication 3, dans lequel on donne à l'avance comme information supplémentaire au moins un repère supplémentaire de la carte géographique.

5. Procédé suivant l'une des revendications 3 ou 4, dans lequel on donne à l'avance comme information supplémentaire l'un des repères de la carte géographique de manière à ce qu'il corresponde au point de départ et/ou au point de destination remarquable.

6. Procédé suivant l'une des revendications précédentes, dans lequel les coûts de noeuds et/ou les coûts de repères de la carte géographique comprenant des coûts dans l'espace et/ou dans le temps, les coûts dans l'espace représentant des distances dans l'espace allant des noeuds (KN) aux repères de la carte géographique et/ou entre les repères de la carte géographique et les coûts dans le temps représentant une durée (DUR) de trajet, qui est nécessaire en moyenne pour parcourir les distances dans l'espace.

7. Procédé suivant la revendication 6, dans lequel
- on pondère les coûts dans le temps et les coûts dans l'espace en fonction d'un souhait d'un utilisateur,
- on détermine l'itinéraire et/ou le coût (MIN_KOST) minimum en fonction des coûts pondérés.

8. Dispositif de détermination du coût (MIN KOST) minimum pour aller d'un point (STO) de départ à un point (ZIO) de destination sur une carte (MAP) géographique qui est subdivisée en des parties (PARC) de carte géographique, pour planifier un itinéraire allant du point (STO) de départ au point (ZIO) de destination, le dispositif étant constitué pour
- la détermination d'une partie (PARC_ST) de la carte géographique de départ donnée à l'avance et d'une partie (PARC_ZI) de la carte géographique de destination donnée à l'avance, qui comprennent le point (STO) de départ et respectivement le point (ZIO) de destination parmi les parties (PARC) de la carte (MAP) géographique en fonction du point (STO) de départ et en fonction du point (ZIO) de destination,
- la détermination d'un premier nombre donné à l'avance de noeuds (STK) de départ ou d'un deuxième nombre donné à l'avance de noeuds (ZIK) de destination, qui représentent les noeuds (KN) les plus proches du point (STO) de départ ou respectivement du point (ZIO) de destination, auxquels sont affectés des coûts (STK_KOST) de noeuds de départ et respectivement des coûts (ZIK_KOST) de noeuds de destination pour aller des noeuds (STK) de départ ou des noeuds (ZIK) de destination correspondants jusqu'à des repères (LM_1 à LM_4) de la carte géographique, les repères de la carte géographique étant choisis dans les noeuds contenus dans la carte géographique qui sont reliés à d'autres noeuds par des tronçons d'un réseau de voies et qui représentent des passages par lesquels on peut passer de la partie (PARC_ST) de la carte géographique de départ ou de la partie (PARC_ZI) de la carte géographique de destination dans une autre des parties (PARC) de la carte (MAP) géographique en fonction du point (STO) de départ et respectivement du point (ZEO) de destination,
- la détermination d'au moins l'un des repères de la carte géographique et des coûts (STK_KOST) de noeuds de départ correspondant et des coûts (ZIK-KOST) de noeuds de destination correspondant en fonction du noeud (STK) de départ ou respectivement en fonction du noeud (ZIK) de destination,
- la détermination du coût (MIN_KOST) minimum en fonction des coûts (STK_KOST) de noeuds de départ et des coûts (ZIK_KOST) de noeuds de destination.
